# EUROPÄISCHE PATENTSCHRIFT

(11) **EP 0 621 400 B1**
(45) Veröffentlichungstag und Bekanntmachung des Hinweises auf die Patenterteilung: **31.03.1999**
(21) Anmeldenummer: 94105645.9
(22) Anmeldetag: 13.04.1994
(51) Int. Cl.: F02B 3/12, F02M 45/02, F01N 3/02

(54) **Luftverdichtende Einspritzbrennkraftmaschine mit einer Abgasnachbehandlungseinrichtung zur Reduzierung von Stickoxiden**
Air compressing injection internal combustion engine with an exhaust gas treating device for reducing nitrous oxides
Moteur à combustion interne à injection et à compression d'air avec un dispositif pout traiter les gaz d'échappement à fin de réduire les oxides azoté

(30) Priorität: 23.04.1993 DE 4313348
(43) Veröffentlichungstag der Anmeldung: 26.10.1994
(73) Patentinhaber: DAIMLER-BENZ AKTIENGESELLSCHAFT, 70567 Stuttgart (DE)
(72) Erfinder: Krämer, Michael, Dr., D-73274 Notzingen (DE); Wirbeleit, Friedrich, Dr., D-73733 Esslingen (DE); Enderle, Christian, D-73666 Baltmannsweiler (DE); Friess, Walter, D-70597 Stuttgart (DE); Krutzsch, Bernd, Dr., D-73770 Denkendorf (DE); Withalm, Gert, D-73061 Ebersbach (DE); Schön, Christof, Dr., D-71384 Weinstadt (DE); Mikulic, Leopold, Dr., D-73773 Aichwald (DE); Hertweck, Gernot, D-70736 Fellbach (DE); Thoma, Frank, D-70192 Stuttgart (DE)

(56) Entgegenhaltungen:
- EP-A- 0 070 619
- DE-A- 2 742 609
- GB-A- 2 196 058
- PATENT ABSTRACTS OF JAPAN vol. 14, no. 174 (M-959) (4117) 5. April 1990 & JP-A-02 027 117 (AGENCY OF IND. SCIENCE & TECHNOL.) 29. Januar 1990

## Beschreibung

Die Erfindung betrifft eine luftverdichtende Einspritzbrennkraftmaschine mit einer Abgasnachbehandlungseinrichtung, der Reduktionsmittel zur Reduzierung von Stickoxiden zuführbar sind, nach den im Oberbegriff des Patentanspruchs 1 angegebenen Merkmalen.

Aus der EP 0 488 386 A1 ist eine derartige Brennkraftmaschine mit einer die Stickoxide reduzierenden Abgasnachbehandlungseinrichtung sowie mit einer aus Hochdruckpumpe und mindestens einer Einspritzdüse bestehenden Kraftstoffeinspritzanlage mit Kraftstoff- bzw. Primäreinspritzung in den Brennraum der Brennkraftmaschine bekannt. Zum Zwecke der Stickoxidreduzierung wird aus einem Reservoir entnommener flüssiger Kohlenwasserstoff als Reduktionsmittel mittels einer in das Saugrohr einmündenden Zusatzeinspritzdüse eingespritzt. Diese Zusatzeinspritzdüse ist nach Fig. 7 mit einer für die Primäreinspritzung vorgesehenen Haupteinspritzdüse leitungsmäßig verbunden. Dabei sind Haupteinspritzdüse und Zusatzeinspritzdüse für unterschiedliche Zylinder der Brennkraftmaschine bestimmt.

Die für die Verbrennung bestimmte Primäreinspritzung in den Brennraum der Brennkraftmaschine erfolgt durch die Haupteinspritzdüse, während die zur Stickoxidreduzierung dienende Sekundär- bzw. Zusatzeinspritzung in das Luftansaugrohr durch die Zusatzeinspritzdüse zum Zeitpunkt des Überschneidungs-0T erfolgt, bei dem Einlaß- und Auslaßventil gleichzeitig kurzweilig geöffnet sind.
Der somit zusätzlich in das Luftansaugrohr eingespritzte Kraftstoff wird durch die im Saugrohr herrschenden ungünstigen Bedingungen kaum aufbereitet noch der Abgasnachbehandlungseinrichtung in nennenswerter Menge zugeführt. Ein Großteil des zusätzlich dosierten Kraftstoffes verbrennt im folgenden Arbeitstrakt.

Zusatzeinrichtungen dieser Art sind wenig geeignet, Stickoxiden bedeutsam entgegenzuwirken.

Der Erfindung liegt die Aufgabe zugrunde, die Primäreinspritzung in den Brennraum und die Sekundäreinspritzung zur Abgasnachbehandlung mit einfacheren Mitteln zu realisieren bei verbesserter katalytischer Aktivität bzw. Wirksamkeit der Abgasnachbehandlungseinrichtung.

Die Aufgabe wird durch die Merkmale des Patentanspruchs 1 gelöst.

In den Abhängigen Ansprüchen sind noch förderliche Weiterbildungen der Erfindung angegeben.

Durch die besonderen Maßnahmen bei einer Kraftstoffeinspritzanlage als Common Rail-System oder mit elektronisch angesteuerter Steckpumpe ist es möglich, die Nacheinspritzmenge und den Zeitpunkt der Nacheinspritzung zu steuern bzw. zu regeln. Ferner ist eine zylinder- und zyklusselektive Nacheinspritzung erreichbar, um den Prozeß der Stickoxidreduzierung weiter zu optimieren.

Dadurch, daß nicht nur die zur Verbrennung bestimmte Primäreinspritzung in den Brennraum der Brennkraftmaschine, sondern auch eine die rasche Aktivierung der Abgasnachbehandlungseinrichtung oder die Reduzierung der Stickoxide bewirkende Sekundär- bzw. Zusatzeinspritzung als früher oder später Nachspritzer in diesen Brennraum mit einer einzigen Kraftstoffeinspritzdüse realisiert wird, ist eine mit wesentlich geringerem Fertigungs- und Bauaufwand verbundene Ausführung erreicht, bei der die einzige Kraftstoffeinspritzdüse zweimal innerhalb eines Arbeitsspieles der Brennkraftmaschine mit definiertem zeitlichem Abstand oder bei einer Ausführung mit Vor- und Haupteinspritzung dreimal angesteuert wird.

Durch die Wahl der Nachspritzzeitpunkte ergibt sich die Möglichkeit eines frühen Nachspritzers, der eine überwiegende Heizfunktion für Abgas und Katalysator hat, und die Möglichkeit eines späten Nachspritzers, der als innermotorisch aufbereitetes und anschließend weitgehend vollständig ins Abgas gelangendes Reduktionsmittel für die Abgsnachbehandlungseinrichtung dient.

Aus der DE 27 42 609 A1 sind noch Maßnahmen mit innermotorischer Dosierung von Zusatzkraftstoff zur Verminderung zu hoher Noₓ-Bildung beim Brennvorgang in luftverdichtenden Brennkraftmaschinen bekannt, um in einer späten, aber zeitlich richtigen Phase der Hauptverbrennung den freien Sauerstoff dem Stickstoff vorzuenthalten und so die Noₓ-Bildung zu vermeiden. Zur Erreichung dieses Zieles wird eine Nocken-Stempel-Einspritzanlage erwähnt.

Die Zusatzeinspritzung als früher Nachspritzer findet im Bereich der Endphase der Verbrennung zwischen 20° und 80° nach Z0T statt; der Kraftstoff, z.B. Dieselkraftstoff als "früher" Nachspritzer, erfolgt also zu einem Zeitpunkt, bei dem die Verbrennung aus der Primäreinspritzung zumindest weitgehend beendet ist. Die Brennraumtemperaturen müssen so hoch sein, daß die nachzuspritzende Kraftstoffmenge möglichst vollständig verbrennt. Diese zusätzlich eingebrachte Kraftstoffmenge dient ausschließlich zur erwünschten Erhöhung der Abgastemperatur vor der Abgasnachbehandlungseinrichtung, um bei zu niedrigen Temperaturen eine raschere Erwärmung dieser Einrichtung zwecks schnellerem Ansprechen der katalysatischen Aktivität zu ermöglichen.

Dagegen nimmt die Zusatzeinspritzung als später Nachspritzer nicht an der Verbrennung teil und setzt zu einem Zeitpunkt zwischen 80° nach Z0T bis zum UT-Bereich ein, bei dem der Kraftstoff nicht verbrennt, sondern verdampft, crackt und sich mit Luft und den Verbrennungsgasen vermischt, wobei die NOₓ-Moleküle noch im Brennraum im heißen Gas reduziert werden und zur Abgasnachbehandlungseinrichtung strömen, einem Denox-Katalysator, z.B. in der Ausführung als Zeolith oder Perowskit.

Im Denox-Katalysator bilden sich Reaktionen zwischen den N0x-Molekülen und den hochreaktiven Kohlenwasserstoffbruchstücken oder reaktionsfreudigen Radikalen, was zur Reduktion der N0ₓ-Molekühle in Stickstoff und Sauerstoff führt.
Die Zusatzeinspritzung bietet sich insbesondere bei Einspritzsystemen an, die auf Basis des Common-Rail-Prinzips arbeiten, da hier stets hohe Drücke im Speichersystem zur Verfügung stehen, die sich vorteilhaft auf die Zerstäubungsgüte auch bei der Zusatzeinspritzung auswirken.

Für die Zusatzeinspritzung sind aber auch sogenannte elektronisch angesteuerte Steckpumpen verwendbar. Die Zusatzeinspritzung ist sowohl für Vorkammer- und Wirbelkammerbrennkraftmaschinen als auch für direkteinspritzende Brennkraftmaschinen geeignet und auch einsetzbar bei Einspritzsystemen mit Vor- und Haupteinspritzung.

Durch die stickoxidreduzierenden Maßnahmen beim späten Nachspritzer sind wichtige Parameter frei einstell- bzw. wählbar, wie die Menge des Reduktionsmittels, der Zeitpunkt der Einbringung und die Höhe des Drucks, wodurch die Aufbereitung des Reduktionsmittels im Hinblick auf die Reduktionsraten optimierbar ist.

Der Gegenstand der Erfindung ist in der Zeichnung schematisch dargestellt und anhand eines Ausführungsbeispieles näher beschrieben. Es zeigen:
- Fig. 1: eine Brennkraftmaschine mit einer in den Brennraum hineinragenden Einspritzdüse für die Primäreinspritzung und für die als Nachspritzer wirkende Sekundäreinspritzung,
- Fig. 2: eine grafische Darstellung des kurbelwinkelabhängigen frühen oder späten Nachspritzers,
- Fig. 3: ein den frühen und späten Nachspritzer darstellendes Flußdiagramm,
- Fig. 4: eine Zeitachse t mit dem Startzeitpunkt t_{St}, der Zeitspanne t_{nSt} und dem zeitlichen Grenzwert t₂ und
- Fig. 5: eine Temperaturachse mit den drei Grenzwerten T₁,T₂,T₃ für die jeweiligen Nachspritzer.

Eine mehrzylindrige luftverdichtende Einspritzbrennkraftmaschine 1 weist eine nach dem Common-Rail-System arbeitende Kraftstoffeinspritzanlage 2 auf, die aus einer Hochdruckpumpe 3 und beispielsweise vier magnetventilgesteuerten Einspritzdüsen 4 besteht, die allesamt mit einem als Speicher wirkenden Verteilungsrohr 5 verbunden sind, in dem der von der Hochdruckpumpe 3 geförderte Kraftstoff, nämlich Dieselkraftstoff, auf hohem Druckniveau für die Primäreinspritzung und für die mit zeitlichem Abstand nachfolgende Sekundär- bzw. Zusatzeinspritzung pro Zylinder 6 gehalten wird.

Die Ansteuerung der mit den Einspritzdüsen 4 zusammenwirkenden Magnetventile 7 erfolgt durch eine betriebsparameterabhängig arbeitende Steuereinheit 8. Die Menge der Zusatzeinspritzung beträgt z.B. weniger als 2% der Einspritzmenge der Primäreinspritzung, wobei der Einspritzdruck deutlich über dem Brennraumdruck liegt. Als Eingabegrößen sind z.B. die Drehzahl n, Last L, Kurbelwinkel KW und sonstige Parameter vorgesehen.
Jede Einspritzdüse 4 wird pro Arbeitsspiel zweimal angesteuert, d.h. die erste Ansteuerung bestimmt die für die Verbrennung vorgesehene Einspritzmenge der Primäreinspritzung und die zweite Ansteuerung bestimmt die für die Abgastemperaturerhöhung oder für die Stickoxidreduktion erforderliche Einspritzmenge der Sekundärbzw. Zusatzeinspritzung, wobei dieser Nachspritzer als früher oder später Nachspritzer der Primäreinspritzung betriebsparameterabhängig nacheilt, worauf nachfolgend näher eingegangen wird.

Gegebenenfalls kann anstelle einer Zusatzeinspritzung pro Arbeitsspiel für alle Zylinder je nach Anforderung und Ausführung der Abgasnachbehandlungseinrichtung auch eine zyklische Einspritzung durchführbar sein, d. h. Zusatzeinspritzung nur jedes zweiten, dritten oder x-ten Arbeitsspieles, wobei die Zusatzeinspritzung nur an ausgewählten Zylindern stattfinden kann, die dann in einen bestimmten Regelzyklus umgeschaltet werden.

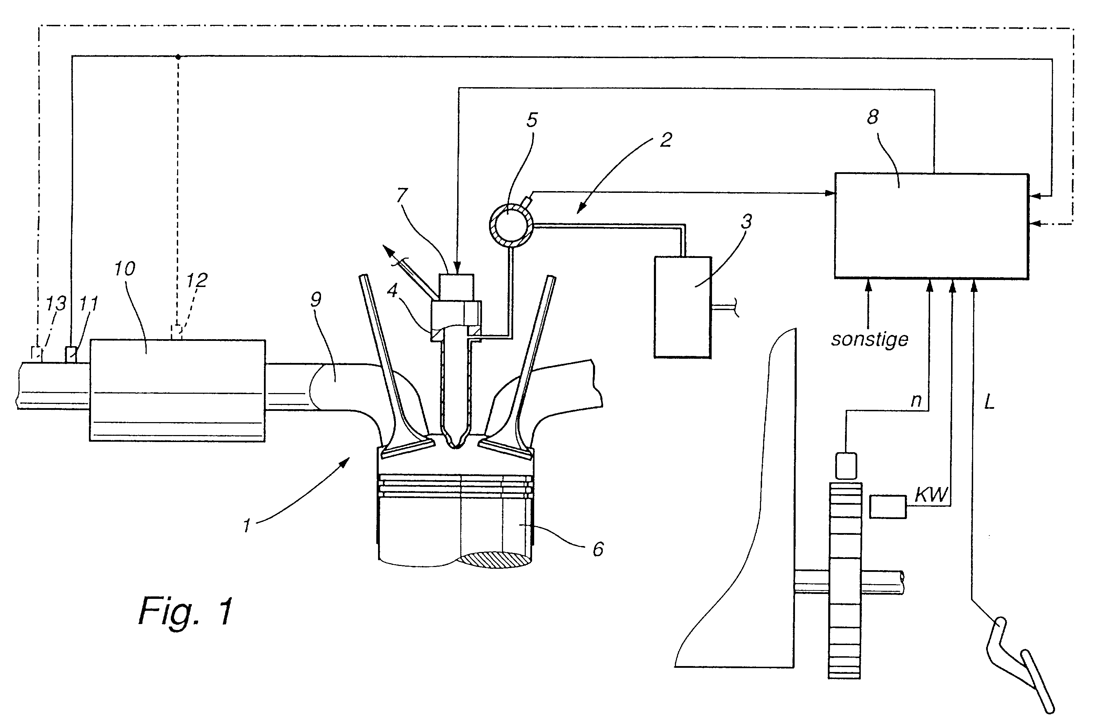

Im Abgastrakt gelangen die N0ₓ-haltigen Abgase in eine in der Abgasleitung 9 angeordnete und als Denox-Katalysator 10 ausgebildete Abgasnachbehandlungseinrichtung, in der Kohlenwasserstoffbruchstücke oder Radikale die vorliegenden N0ₓ-Werte reduzieren. Als Denox-Katalysator sind z.B. Zeolithe, Perowskite oder edelmetallhaltige Katalysatoren einsetzbar.
Stromab des Denox-Katalysators 10 ist ein Sensor 11 angeordnet, der nach dem durch den Katalysator geglätteten Verlauf der Abgase die Abgastemperatur T_{Abg} erfaßt und die entsprechenden Signale als Eingabegrößen dem Steuergerät 8 eingibt. Anstelle dieses Sensors 11 kann auch ein die Bauteiltemperatur der Denox-Katalysators 10 erfassender Sensor 12 vorgesehen sein (mit unterbrochenen Linien in Fig. 1 dargestellt). Ferner kann zu dem die Abgastemperatur erfassenden Sensor 11 noch ein weiterer Sensor 13 für die Erfassung von Kohlenwasserstoffen (HC) und/oder Stickoxiden (N0ₓ) eingesetzt werden, der eine feinere Abstimmung des späten Nachspritzers im Sinne einer verbesserten Abgasqualität ermöglicht (in strichpunktierten Linien in Fig.1 dargestellt).

Die frühe und späte Nacheinspritzung ist im Motorkennfeld betriebsparameterabhängig gesteuert und nach der Abgastemperatur geregelt, was derart geschieht, daß nach dem Kaltstart bereits im Motor-Leerlauf früh nachgespritzt wird. Dabei wird ausgehend von einer in der elektronischen Steuerung abgespeicherten Grundeinstellung zuerst der Einspritzzeitpunkt bei konstant gehaltener kleiner Einspritzmenge so weit verstellt, bis der Abgastemperatursensor 11 die höchste Abgastemperatur mißt. Anschließend wird die gewünschte und in der Regel höhere Solltemperatur nach dem Katalysator durch Anpassen bzw. Erhöhen der Nachspritzmenge eingestellt. Bei Überschreitung der optimalen Abgastemperatur, z.B. bei Vorliegen einer höheren Motorleistung mit entsprechend höherer Abgastemperatur, wird die Kat-Heiz-Funktion der Einspritzanlage sofort abgeschaltet. Der späte Nachspritzer ist erst aktiv, wenn die Abgastemperatur einen bestimmten Grenzwert überschreitet, und wird dann abgeschaltet, wenn eine definierte hohe Abgastemperatur erreicht ist, bei der ohnehin kein N0ₓ-reduzierender Einfluß in der Abgasnachbehandlungseinrichtung bzw. im Katalysator mehr möglich ist.

Gegebenenfalls kann auch eine Kombination zwischen dem beschriebenen frühen und späten Nachspritzer wünschenswert sein, das bedeutet, der Zeitpunkt der Nacheinspritzung wird so gewählt, daß nur ein Teil des nachgespritzten Kraftstoffes verbrannt wird und die Abgastemperatur erhöht und der restliche Kraftstoff unverbrannt bleibt und damit als aufbereitetes Reduktionsmittel im Katalysator zur Verfügung steht.

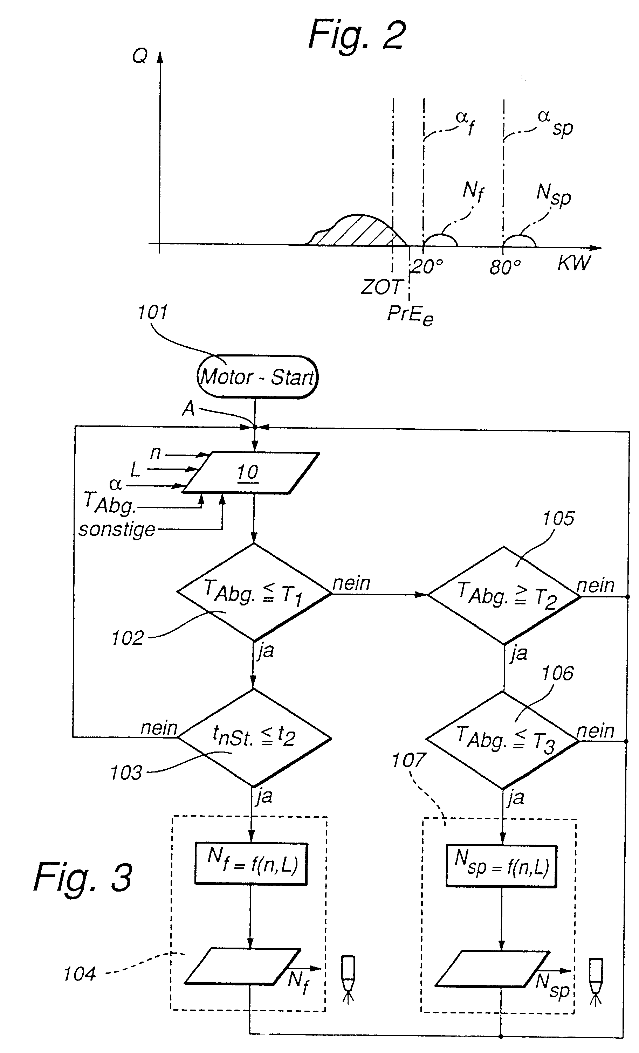

In Fig. 2 ist auf der Abszisse des Diagramms die Drehung der Kurbelwelle einer Brennkraftmaschine in °Kurbelwinkel (°KW) und auf der Ordinate die Kraftstoffmenge Q aufgetragen. In dem Diagramm ist mit N_{f} ein früher Nachspritzer und mit Nₛₚ ein später Nachspritzer bezeichnet, wobei mit α_{f} die Lage des Beginns des frühen Nachspritzers und mit αₛₚ die Lage des späten Nachspritzers jeweils nach dem Zünd-0.T. (Z0T) bezeichnet ist α_{f} und αₛₚ sind abhängig von Drehzahl und Last der Brennkraftmaschine. α_{f} kann z.B. in dem Bereich zwischen 20°...80° KW nach Z0T unter der Bedingung einsetzen, wenn die Abgastemperatur unterhalb eines definierten Grenzwertes zwischen 150° ... 200° liegt, dagegen kann αₛₚ in dem Bereich zwischen 80°...180° KW unter der Voraussetzung eintreten, wenn die Abgastemperatur einen bestimmten Grenzwert zwischen 200°...300°C überschritten hat. Der frühe und der späte Nachspritzer liegen mit zeitlichem Abstand nach dem Ende der Primäreinspritzung PrEₑ.

Das nachfolgend beschriebene und in Fig. 3 gezeigte Flußdiagramm zur Darstellung der Arbeitsweise des elektronischen Steuergerätes bezieht sich nicht auf die Primäreinspritzung, sondern lediglich auf den "frühen" und den "späten" Nachspritzer.

Nach dem Start 101 der Brennkraftmaschine werden im Eingabeblock 10 die aktuellen Werte der Brennkraftmaschine erfaßt, wie Drehzahl n, Last L, Kurbelwinkel α, Abgastemperatur T_{Abg} und sonstige Werte.

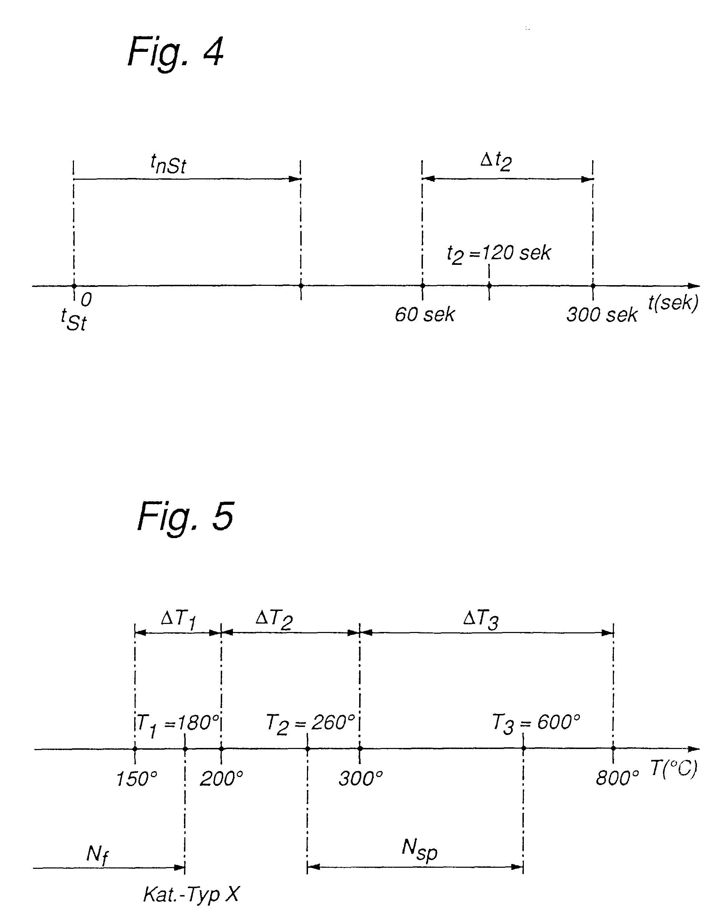

Im Verzweigungsblock 102 wird überprüft, ob die Abgastemperatur T_{Abg} unterhalb eines Grenzwertes T₁ liegt. Dieser Grenzwert T₁ ist katalysatortypabhängig festgelegt und kann entsprechend ΔT₁ in Fig. 5 zwischen ca. 150°C und 200°C liegen. Für den in Fig. 5 beispielhaft angegebenen Katalysator "Kat.-Typ x" liegt der Grenzwert T₁ bei 180°. Wenn die Brennkraftmaschine noch nicht ihre Betriebstemperatur erreicht hat und somit T_{Abg}≦T₁ ist, verzweigt die Steuerung zum Verzweigungsblock 103. Für den Fall, daß hier eine bestimmte Zeitspanne t_{nSt} nach dem Startzeitpunkt t_{St} der Brennkraftmaschine den Grenzwert t₂ überschritten hat, verzweigt die Steuerung zum Punkt "A" zur erneuten Eingabe der Betriebsparameter im Block 10. Dieser zeitliche Grenzwert t₂ kann motortypabhängig festgelegt werden und entsprechend Δt₂ in Fig. 4 zwischen ca. 60 bis 300 Sekunden liegen.

Sollte die Zeitfrage jedoch ergeben, daß der zeitliche Grenzwert t₂ noch nicht überschritten ist, wird im nachfolgenden Block 104 ein "früher Nachspritzer" zum Zwecke der raschen Temperaturerhöhung der Abgase realisiert, was dadurch geschieht, daß zunächst in dem Block 104 der frühe Nachspritzer N_{f} in Abhängigkeit von Betriebspunkten, wie Drehzahl n und Last L bezüglich Einspritzbeginn, Einspritzdauer und -menge, feineingestellt bzw. modifiziert und entsprechend dieses ermittelten Wertes die Einspritzdüse angesteuert wird. Der frühe Nachspritzer N_{f} beginnt gemäß Fig. 2 frühestens im Bereich der Endphase der Verbrennung der Primäreinspritzung PrEₑ, nämlich bei ca.20° nach Z0T oder spätestens bei ca. 80° nach Z0T.

Somit erfolgt in dem Block 104 die Aktivierung des Katalysator-Heizens, die solange aufrechterhalten wird, bis der jeweils neue Durchlauf von Punkt A aus durch den Block 102 und/oder Block 103 unterbrochen wird zu einem Zeitpunkt, wenn die Abgastemperatur T_{Abg} oberhalb eines Grenzwertes T₁ und/oder eines zeitlichen Grenzwertes t₂ liegt. Die Steuerung verzweigt zum Verzweigungsblock 105, in dem überprüft wird, ob T_{Abg} einen Grenzwert T₂ überschritten hat, der auch katalysatortypabhängig festgelegt sein kann und entsprechend ΔT₂ in Fig. 5 zwischen 200°C und 300°C liegt. Falls nicht, liegt kein Erfordernis für einen "späten" Nachspritzer vor. Es erfolgt die Verzweigung zum Punkt "A" zur erneuten Eingabe über Block 102 wieder zum Block 105. Ist hier der Grenzwert z.B. von T₂=260°C überschritten, wird im nachfolgenden Block 106 überprüft, ob T_{Abg} einen zweiten Grenzwert T₃ noch nicht erreicht hat, welcher entsprechend T₃ in Fig. 5 in einem Bereich zwischen ca. 300°C und 800°C liegt, wobei der untere Grenzwert T₂ und der obere Grenzwert T₃ einen angemessenen Abstand haben müssen, z.B. 100°C Temperaturdifferenz. Wenn die Bedingung erfüllt ist, nämlich T₂ überschritten und T₃ noch nicht erreicht ist, dann wird im nachfolgenden Block 107 zunächst der späte Nachspritzer N_{Sp} in Abhängigkeit von Betriebspunkten, wie Drehzahl n und Last L hinsichtlich Einspritzbeginn, Einspritzdauer und -menge feineingestellt. Mit den entsprechend ermittelten Werten wird die Einspritzdüse angesteuert.

In dem Block 106 erfolgt somit die Aktivierung des Denox-Katalysators. Der späte Nachspritzer dient dabei ausschließlich als aufbereitetes NOₓ-Reduktionsmittel für den nachgeschalteten Katalysator.

Ist jedoch T_{Abg} größer als T₃, erfolgt die Verzweigung zum Punkt A zur erneuten Eingabe. Die späten Nachspritzer sind somit nicht mehr aktiv.

## Patentansprüche

1. Luftverdichtende Einspritzbrennkraftmaschine (1) mit einer Abgasnachbehandlungseinrichtung (10), der Reduktionsmittel zur Reduzierung von Stickoxiden zuführbar sind, und mit einem die Temperatur im Bereich der Abgasnachbehandlungseinrichtung (10) erfassenden Sensor (11;12), mit einer Kraftstoffeinspritzanlage, bestehend aus einer Hochdruckpumpe (3) und mindestens einer Einspritzdüse (4) mit für die Verbrennung vorgesehener Kraftstoffeinspritzung als Primäreinspritzung in den Brennraum der Einspritzbrennkraftmaschine (1), sowie mit mindestens einer auf die Wirksamkeit der Abgasnachbehandlungseinrichtung (10) Einfluß nehmenden Sekundäreinspritzung, wobei beide Einspritzungen mit demselben Kraftstoff innerhalb eines Arbeitsspieles mit zeitlichem Abstand voneinander erfolgen,
**dadurch gekennzeichnet,**
daß bei einer Kraftstoffeinspritzanlage mit einem Common-Rail-System (2) oder elektronisch angesteuerter Steckpumpe die für die Primäreinspritzung vorgesehene Einspritzdüse (4) zugleich Einspritzdüse für die Sekundäreinspritzung ist, die als Nachspritzer frühestens im Bereich der Endphase der Verbrennung nach dem Zünd-OT erfolgt, derart, daß der Nachspritzer ein unmittelbar nach dem Start der Einspritzbrennkraftmaschine (1) einsetzender früher Nachspritzer für die Abgastemperaturerhöhung der Abgasnachbehandlungseinrichtung (10) und/oder daß der Nachspritzer ein später Nachspritzer für die Stickoxidreduzierung der Abgasnachbehandlungseinrichtung (10) ist.

2. Luftverdichtende Einspritzbrennkraftmaschine nach Anspruch 1,
**dadurch gekennzeichnet,**
daß der frühe Nachspritzer nach dem Startzeitpunkt der Einspritzbrennkraftmaschine im Bereich zwischen 20° und 80° nach Zünd-OT bei einer Zeitspanne zwischen t_{nST} = 60 bis 300 Sekunden einsetzt.

3. Luftverdichtende Einspritzbrennkraftmaschine nach Anspruch 1,
**dadurch gekennzeichnet,**
daß der späte Nachspritzer zwischen 80° nach Zünd-0T und dem UT-Bereich liegt.

4. Luftverdichtende Einspritzbrennkraftmaschine nach Anspruch 1,
**dadurch gekennzeichnet,**
daß der die Temperatur erfassende Sensor (11) im Abgasstrom stromab der Abgasnachbehandlungseinrichtung (10) angeordnet ist.

5. Luftverdichtende Einspritzbrennkraftmaschine nach Anspruch 1,
**dadurch gekennzeichnet,**
daß der die Temperatur erfassende Sensor (12) die Bauteiltemperatur der Abgasnachbehandlungseinrichtung (10) erfaßt.

6. Luftverdichtende Einspritzbrennkraftmaschine nach Anspruch 1,
**dadurch gekennzeichnet,**
daß die Einspritzmenge des Nachspritzers kleiner als diejenige der für die Verbrennung vorgesehenen Primäreinspritzung ist.

## Claims

1. Air-compressing fuel-injection internal-combustion engine (1) with an exhaust treatment device (10), to which reduction agents for the reduction of nitrogen oxides can be fed, and with a sensor (11; 12) sensing the temperature in the region of the exhaust treatment device (10), with a fuel injection system, comprising a high-pressure pump (3) and at least one injection nozzle (4) with fuel injection, provided for the combustion, as primary injection into the combustion chamber of the fuel-injection engine (1), and also with at least one secondary injection, influencing the effectiveness of the exhaust treatment device (10), both injections taking place with the same fuel within one operating cycle with a time interval from each other, characterized in that, in the case of a fuel injection system with a common-rail system (2) or electronically actuated unit fuel injector, the injection nozzle (4) provided for the primary injection is at the same time an injection nozzle for the secondary injection which, as a supplementary injection, takes place at the earliest in the region of the end phase of the combustion after the ignition top dead centre in such a way that the supplementary injection is an early supplementary injection commencing directly after the starting of the fuel-injection engine (1), for increasing the temperature of the exhaust of the exhaust treatment device (10) and/or that the supplementary injection is a late supplementary injection for reducing the nitrogen oxides of the exhaust treatment device (10).

2. Air-compressing fuel-injection internal-combustion engine according to Claim 1, characterized in that the early supplementary injection commences after the starting time of the fuel-injection engine in the region between 20° and 80° after ignition top dead centre with a time span between t_{nST} = 60 to 300 seconds.

3. Air-compressing fuel-injection internal-combustion engine according to Claim 1, characterized in that the late supplementary injection lies between 80° after ignition top dead centre and the bottom dead centre region.

4. Air-compressing fuel-injection internal-combustion engine according to Claim 1, characterized in that the sensor (11) sensing the temperature is arranged in the exhaust flow downstream of the exhaust treatment device (10).

5. Air-compressing fuel-injection internal-combustion engine according to Claim 1, characterized in that the sensor (12) sensing the temperature senses the component temperature of the exhaust treatment device (10).

6. Air-compressing fuel-injection internal-combustion engine according to Claim 1, characterized in that the amount of injection of the supplementary injection is less than that of the primary injection provided for the combustion.

## Revendications

1. Moteur à combustion interne à injection et à compression d'air (1) avec un dispositif de retraitement des gaz d'échappement (10), auquel peuvent être amenés des moyens de réduction destinés à réduire les oxydes azotés, et avec un capteur (11; 12) appréhendant la température dans la zone du dispositif de retraitement des gaz d'échappement (10), avec une installation d'injection de carburant, constituée d'une pompe haute pression (3) et d'au moins un injecteur (4) avec une injection de carburant prévue pour la combustion, à titre d'injection primaire, dans la chambre de combustion du moteur à combustion interne à injection (1), ainsi qu'avec au moins une injection secondaire influant sur l'efficacité du dispositif de retraitement des gaz d'échappement (10), les deux injections s'effectuant avec le même carburant, dans les limites d'un cycle de travail, avec un espacement temporel l'une de l'autre,
caractérisé en ce que,
dans le cas d'une installation d'injection de carburant dotée d'un système à rampe d'alimentation commune (2) ou d'une pompe à enfichage à commande électronique, l'injecteur (4) prévu pour l'injection primaire est en même temps l'injecteur destiné à l'injection secondaire, qui s'effectue à titre de post-injection, au plus tôt dans la zone de la phase finale de la combustion, après atteinte du point mort haut d'allumage, de manière que la post-injection soit une post-injection mise en service plus précocement, directement après le démarrage du moteur à combustion interne à injection (1), pour augmenter la température des gaz d'échappement du dispositif de retraitement de gaz d'échappement (10), et/ou de manière que la post-injection soit une post-injection plus tardive, pour obtenir la réduction des oxydes azotés du dispositif de retraitement des gaz d'échappement (10).

2. Moteur à combustion interne à injection et à compression d'air selon la revendication 1, caractérisé en ce que la post-injection précoce est mise en service, après le moment du démarrage du moteur à combustion interne à injection, dans la zone comprise entre 20° et 80° après le point mort haut d'allumage, pour un intervalle de temps durant entre t_{nST} = 60 à 300 secondes.

3. Moteur à combustion interne à injection et à compression d'air selon la revendication 1, caractérisé en ce que la post-injection tardive agit entre 80° après le point mort haut d'allumage et la plage de point mort bas.

4. Moteur à combustion interne à injection et à compression d'air selon la revendication 1, caractérisé en ce que le capteur (11) appréhendant la température est disposé dans le courant de gaz d'échappement, en aval du dispositif de retraitement de gaz d'échappement (10).

5. Moteur à combustion interne à injection et à compression d'air selon la revendication 1, caractérisé en ce que le capteur (12), appréhendant la température, appréhende la température de composant du dispositif de retraitement de gaz d'échappement (10).

6. Moteur à combustion interne à injection et à compression d'air selon la revendication 1, caractérisé en ce que la quantité d'injection de la post-injection est inférieure à celle de l'injection primaire prévue pour la combustion.
